# DEMANDE DE BREVET EUROPEEN

(11) **EP 0 599 726 A1**
(43) Date de publication de la demande: **01.06.1994**
(21) Numéro de dépôt: 93402837.4
(22) Date de dépôt: 22.11.1993
(51) Int. Cl.: G03C 7/12, G02B 5/22

(54) **Filtre coloré transflectif et procédé de fabrication d'un tel filtre**

(30) Priorité: 24.11.1992 FR 9214117
(71) Demandeur: SAGEM SA, F-75783 Paris Cédex 16 (FR)
(72) Inventeur: Deffontaines, Christophe, F-95009 Cergy (FR); Parker, Ambroise, F-92500 Rueil-Malmaison (FR); Lecat, Daniel, F-95100 Argenteuil (FR)
(74) Mandataire: Fort, Jacques

(57) **Abrégé**

Le filtre transflectif, utilisable pour constituer un panneau de tableau de bord de véhicule, est réalisé par voie photographique. Pour cela on constitue un film photographique (12) ayant un substrat (14) comportant une tranche photosensible (16) contenant des précurseurs de colorants d'au moins deux couleurs, une couche diffusante (18) et une couche photosensible monochrome. On insole la tranche (16) à travers un négatif par un flus de lumière blanche et la couche (20) à travers un négatif des motifs destiné à être vu en mode réflectif.

## Description

La présente invention concerne les filtres optiques dits transflectifs, c'est-à-dire susceptibles d'être observés en mode transmissif lorsqu'ils sont rétro-éclairés par une source de lumière placée à l'opposé de l'observateur et en mode réflectif lorsqu'ils sont éclairés par la face avant, par exemple par la lumière ambiante.

L'invention trouve une application particulièrement importante, bien que non exclusive, dans la réalisation des panneaux de tableau de bord pour automobile. Pendant le jour, le panneau n'est pas rétro-éclairé. Les motifs (cadrans du compte-tours, de l'indicateur de vitesse, de la jauge à essence) doivent apparaître au conducteur en clair sur fond sombre, généralement en blanc sur noir. Les témoins d'alarme doivent être peu ou pas visibles aussi longtemps que le panneau n'est pas rétro-éclairé à leur emplacement. De nuit, le panneau est rétro-éclairé et les mêmes motifs doivent apparaître sous forme colorée, fréquemment en vert ou en orangé. Lorsqu'un témoin est activé, il doit également apparaître coloré sur fond noir, fréquemment en rouge lorsqu'il s'agit d'une alarme.

De tels panneaux sont à l'heure actuelle généralement réalisés par sérigraphie multiple. On utilise pour cela une feuille de plastique translucide sur laquelle on sérigraphie successivement les différentes couches colorées (rouge, vert et jaune en général lorsque l'on souhaite pouvoir disposer d'une palette complète de couleurs). Puis on constitue une couche diffusante non-colorée. Enfin, on dépose par sérigraphie un masque dans lequel le tracé des motifs reste transparent, alors que les surfaces restantes sont opaques.

Les limitations inhérentes à la sérigraphie multiple font que sept passes de sérigraphie au moins sont alors nécessaires. Et la résolution limite que permet cette technologie est de l'ordre de 100 microns.

On connaît aussi (document EP 341 348) un procédé de fabrication d'un réseau de filtrage multicolore destiné à un afficheur à cristaux liquides. Ce réseau est constitué de deux parties. La première partie constitue une "tranche" polychrome réalisée sur un support, puis séparée de ce dernier. La seconde partie est réalisée à part et constitue un quadrillage opaque. Puis la première partie, séparée de son support par pelage, est fixé sur la seconde.

La présente invention vise à fournir un filtre optique coloré transflectif susceptible d'être réalisé de façon plus simple que par les procédés traditionnels et permettant au surplus d'atteindre, quand cela est nécessaire, une meilleure résolution.

Dans ce but, l'invention propose notamment un filtre optique transflectif comprenant : un substrat unique transparent ou translucide ; une tranche colorée constituée de couches correspondant chacune à un colorant parmi au moins deux ; une couche diffusant la lumière, et un masque opaque sur lequel les tracés à visualiser en couleurs sont représentés par des zones transparentes, la tranche colorée et le masque étant constitués par des émulsions photographiques.

La disposition relative des différentes couches et masques ne correspond pas forcément à l'ordre de l'énumération ci-dessus.

En général, la tranche comportera des émulsions trichromes, permettant une synthèse additive des couleurs, bien que d'autres solutions soient possibles ; les zones transparentes du masque seront généralement non-teintées, ce qui permet de réaliser le masque à partir d'une émulsion en noir et blanc, donnant uniquement naissance à des zones opaques et des zones qui sont transparentes pour l'ensemble du spectre visible synthétisable par les colorants de la tranche.

Il est cependant également possible de réaliser un masque sur lequel certaines indications apparaissent sous forme d'une couleur, telles que par exemple les index ou symboles importants, tels que les vitesses limites en ville, sur route et sur autoroute.

L'invention propose également un procédé permettant de réaliser un filtre transflectif du genre ci-dessus défini, suivant lequel :
- on constitue un film photographique ayant un substrat, une tranche photosensible contenant des précurseurs de colorant d'au moins deux couleurs, une couche diffusante, et une couche photosensible monochrome,
- on insole la tranche à travers un premier maître par un flux de lumière contenant de l'énergie aux longueurs d'ondes d'insolation desdits précurseurs et la couche à travers un maître (négatif ou positif des motifs) suivant le cas, afin de rendre opaque la couche en dehors des tracés de motifs qui doivent apparaître en mode réflectif, et
- on développe ledit film.

Dans un mode avantageux de réalisation de l'invention, la tranche est recouverte par la couche diffusante et par la couche photosensible monochrome. Dans ce cas, la couche diffusante doit être perméable aux produits de développement. En général, la tranche sera alors insolée à travers le substrat tandis que le masque sera insolé directement, donc par un flux dirigé en sens inverse du flux lumineux d'insolation de la tranche. On utilisera alors, pour constituer le masque, une couche d'une émulsion insensible aux longueurs d'ondes présentes dans le flux d'insolation de la tranche, par exemple une émulsion dont la plage de sensibilité se trouve dans l'ultra-violet, et on insolera l'émulsion du masque par un flux de lumière contenant de l'énergie dans la plage appropriée. S'il s'agit d'énergie ultra-violette, on pourra utiliser une couche diffusante absorbant l'ultra-violet, de façon à soustraire les précurseurs des colorants de la tranche, si nécessaire, au rayonnement ultra-violet. Cette dernière précaution n'est cependant généralement pas nécessaire, étant donné la présence d'intercalaires absorbants dans les émulsions couleurs et/ou le spectre étroit de sensibilité des précurseurs de colorant.

L'invention permet de réduire énormément le temps de fabrication d'un filtre, puisqu'il suffit d'une seule opération (dans la mesure où la tranche et la couche photosensible monochrome sont simultanément insolées) ou de deux seulement. De plus, on peut tracer des motifs très fins de quelques microns de largeur seulement, lorsque cela est nécessaire.

Lorsqu'un filtre du type ci-dessus défini est utilisé en mode transmissif, les défauts d'homogénéité éventuel de la source d'éclairement arrière se traduisent par une luminosité irrégulière des motifs. Pour compenser le caractère inhomogène de l'éclairement, on peut donner aux émulsions de la tranche colorée une densité optique variable en plan suivant une loi compensant les variations spatiales d'éclairement de la source d'illumination. Ce résultat est facile à obtenir en utilisant, pour insoler la tranche, un négatif ou maître en couleur complémentaire obtenu par voie photographique à partir d'une illumination d'origine reproduisant celle de la source qui sera utilisée en mode réflectif. Un tel négatif ou maître peut notamment être obtenu par mise en oeuvre du procédé décrit et revendiqué dans la demande de brevet du même jour que la présente, ayant pour titre "Filtre coloré à compensation d'éclairement, procédé de fabrication d'un tel filtre et écran plat d'affichage en comportant application".

L'invention sera mieux comprise à la lecture de la description qui suit d'un mode particulier de réalisation donné à titre d'exemple non-limitatif. La description se réfère aux dessins qui l'accompagnent, dans lesquels :
- la figure 1 montre un fragment de filtre transflectif utilisable comme panneau avant de tableau de bord, tel qu'il apparaît lorsqu'il est éclairé par la face avant, les parties noires étant représentées par des hachures serrées ;
- la figure 2 montre une constitution possible de film photographique utilisable pour réaliser un filtre optique transflectif suivant l'invention, ainsi que la façon dont il peut être insolé en une seule étape, l'échelle n'étant pas respectée pour plus de clarté.

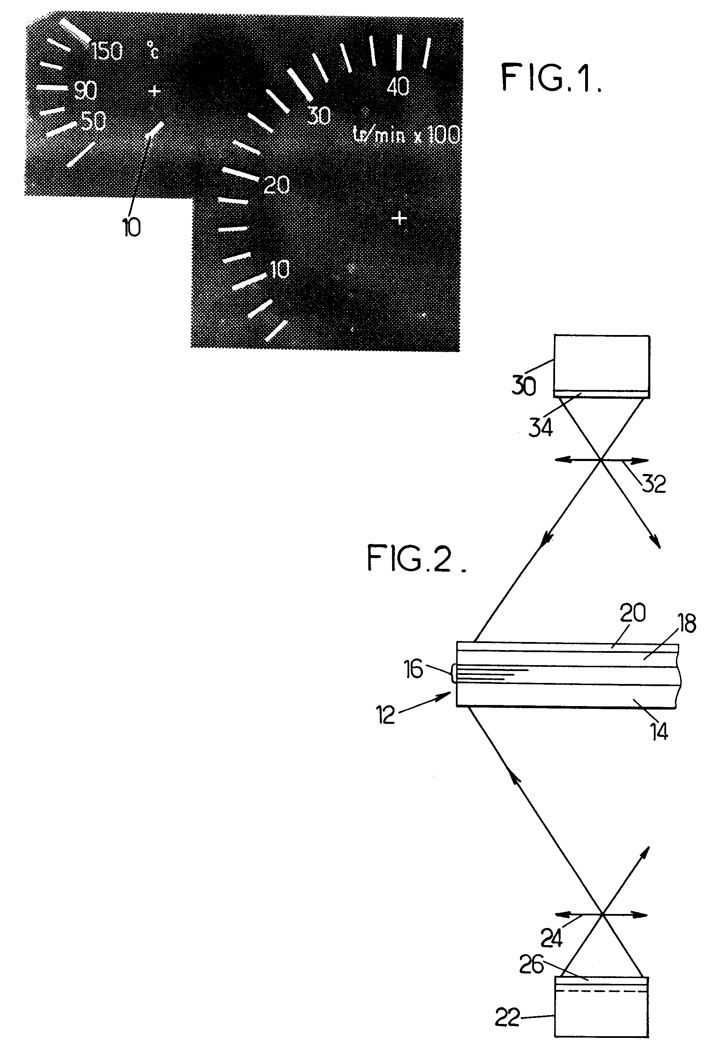

La figure 1 montre, à titre de simple exemple, l'aspect d'une fraction de filtre transflectif constituant un panneau avant de tableau de bord, lorsqu'il est observé en lumière naturelle, c'est-à-dire éclairé depuis l'avant. Il présente un fond opaque, d'aspect noir, sur lequel les motifs apparaissent en blanc, du fait qu'ils sont constitués par des tracés transparents à travers lesquels l'observateur voit une couche diffusante.

Lorsque le filtre est rétro-éclairé, les motifs qui ont un rôle indicatif, vus en blanc sur noir pendant le jour, doivent apparaître dans une couleur telle que le vert ou l'orangé. D'autres motifs, qui sont des indications d'alarme, tels que par exemple un motif 10 d'alarme de température, sont munis d'éléments de rétro-éclairage particuliers pour apparaître dans une autre couleur, généralement en rouge, en cas de déclenchement, aussi bien en éclairement de jour qu'en éclairement de nuit, chaque fois en mode transmissif.

Le filtre peut être constitué en utilisant, comme produit de départ, un film photographique 12 ayant un substrat transparent ou au moins translucide 14 (pellicule d'acétate par exemple) portant plusieurs des couches photosensibles. Dans le cas représenté sur la figure 2, ces couches photosensibles, destinées à permettre un affichage trichrome, par synthèse additive, constituent une tranche 16 ayant trois couches contenant des précurseurs pouvant donner naissance à des colorants jaunes, verts et rouges après développement. Cette tranche 16 est surmontée d'une couche uniforme 18 diffusant la lumière et perméable aux produits de développement et de fixation et enfin d'une couche 20 d'émulsion photosensible monochrome, habituellement en noir et blanc.

Le film ainsi constitué est ensuite soumis à deux insolations, simultanées ou non, avant développement.

Une insolation effectuée côté arrière, est réalisée à l'aide d'une source lumineuse 22, blanche ou du moins contenant de l'énergie aux longeurs d'ondes d'impressionnement des précurseurs de colorants, à travers une optique de projection 24 et un négatif 26. Cette insolation est destinée à impressionner la tranche 16. Pour éviter qu'elle n'ait un effet sur la couche photosensible 20, cette dernière est avantageusement constituée par une émulsion qui n'est impressionnable que par des longueurs d'ondes dans un domaine différent. Par exemple la couche 20 peut contenir des précurseurs qui ne peuvent être impressionnés qu'en lumière ultra-violette. Il suffit alors de placer un filtre arrêtant le rayonnement ultra-violet sur le trajet du flux lumineux provenant de la source 22, constituée par une optique fournissant un flux aussi homogène que possible.

L'autre insolation est effectuée à l'aide d'une autre source 30, par l'avant du film, à travers d'une optique 32 et un négatif 34 représentant les motifs qui doivent être observés en mode réflectif.

Le film est ensuite développé par un procédé qui peut être classique.

Pour compenser la non-uniformité du rétro-éclairage du filtre lors de son utilisation de nuit, il suffit d'insoler de façon variable la tranche 16. En effet, la densité des couleurs obtenue après développement est modulable par réglage de la quantité de lumière reçue, en conservant des conditions de développement identiques pour l'ensemble de l'émulsion.

Pour cela, on peut notamment réaliser un cliché de la source lumineuse de rétro-éclairage, en noir et blanc. Un tel cliché, une fois réalisé avec une source type, pourra être utilisé pour la fabrication de tous les filtres destinés à être employés avec des sources du même genre. Le coefficient de transmission de ce cliché est modulé sur sa surface de manière corrélée avec la répartition de flux de la source de rétro-éclairage. Les émulsions sont ensuite insolées à travers le maître et ce cliché.

L'invention ne se limite pas aux modes particuliers de réalisation décrits à titre d'exemple. Il est par exemple possible de modifier la disposition des couches et d'adopter la suivante :
- film support 12
- tranche colorée 16
- couche diffusante 18
- masque opaque 20,

ou encore :
- tranche colorée 16
- film support 12
- couche diffusante 18
- masque opaque 20.

Par ailleurs, les films utilisés peuvent être de type inversible aussi bien qu'à exposition à travers un négatif.

## Revendications

1. Filtre transflectif comprenant : un substrat unique transparent ou translucide (14) ; une tranche colorée (16) constituée de couches correspondant chacune à un colorant parmi au moins deux ; une couche diffusant la lumière (18) et un masque opaque (20) sur lequel les tracés à visualiser en couleurs sont représentés par des zones transparentes, la tranche colorée et le masque étant constitués par des émulsions photographiques.

2. Filtre selon la revendication 1, caractérisé en ce que ladite tranche est trichrome.

3. Filtre selon la revendication 1 ou 2, caractérisé en ce que la couche diffusante (18) est perméable aux produits de développement et en ce que la tranche est directement portée par le substrat et séparée du masque par la couche diffusante.

4. Panneau de tableau de bord comportant un filtre suivant la revendication 1, 2 ou 3, et des moyens d'éclairage arrière du filtre.

5. Procédé de fabrication de filtre transflectif, caractérisé en ce que :
- on constitue un film photographique ayant un substrat (14), une tranche photosensible (16) contenant des précurseurs de colorant d'au moins deux couleurs, une couche diffusante (18), et une couche photosensible monochrome (20),
- on insole la tranche à travers un premier négatif (26) par un flux de lumière contenant de l'énergie aux longueurs d'ondes d'impressionnement desdits précurseurs et la couche photosensible monochrome (20) à travers un négatif (34) de motifs, afin de rendre opaque dans le domaine visible la couche (20) en dehors des tracés de motifs qui doivent apparaître en mode réflectif, et
- on développe ledit film.

6. Procédé selon la revendication 4, caractérisé en ce que, la tranche (16) étant recouverte par la couche photosensible monochrome, la tranche est insolée à travers le substrat (14) tandis que la couche monochrome est insolée directement, donc par un flux dirigé en sens inverse du flux lumineux d'insolation de la tranche.

7. Procédé selon la revendication 6, caractérisé en ce qu'on constitue le masque à partir d'une couche d'une émulsion insensible aux longueurs d'ondes présentes dans le flux d'insolation de la tranche.

8. Procédé selon la revendication 5, 6 ou 7, destiné à fabriquer un filtre transflectif à éclairage arrière par une source d'éclairement, caractérisé en ce qu'on insole la tranche à travers un négatif obtenu par voie photographique à partir d'une illumination d'origine reproduisant celle de la source utilisée en mode réflectif.
